# DEMANDE DE BREVET EUROPEEN

(11) **EP 1 946 957 A2**
(43) Date de publication de la demande: **23.07.2008**
(21) Numéro de dépôt: 07301480.5
(22) Date de dépôt: 19.10.2007
(51) Int. Cl.: B60N 2/01, B60N 2/06, B60N 2/30

(54) **Agancement de sièges à l'intérieur d'un véhicule automobile proposant une cinquième place escamotable**

(30) Priorité: 23.10.2006 FR 0654443
(71) Demandeur: Renault S.A.S., 92100 Boulogne-Billancourt (FR)
(72) Inventeur: Granger, Philippe, 78640, VILLIERS SAINT FREDERIC (FR)

(57) **Abrégé**

L'invention propose un agencement (10) de sièges à l'intérieur d'un habitacle de véhicule automobile, du type qui comporte au moins deux sièges avant (14, 16) et au moins deux sièges arrières (18, 20) alignés chacun avec un des sièges avant (14, 16), et du type qui comporte un siège (26) supplémentaire qui est interposé transversalement entre les lignes (22, 24) de sièges arrière (18, 20) et avant (14, 16), caractérisé en ce que ledit siège (26) εστ εσχαµοταβλε ετ εστ αυ µο 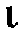 νσ µoβ 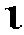 λε εντρε υνε ποσ 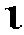 τ 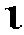 ον εσχαµοτ┌ε δανσ λαθυελλε υν δοσσ 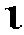 ερ (28) δυ σ 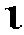 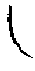 γε (26) συππ λ┌µεντα 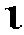 ρε εστ ραβαττυ συρ σον ασσ 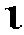 σε (30), ετ υνε ποσ 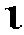 τ 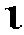 ον δ┌πλ οψ┌ε δανσ λαθυελλε λε δοσσ 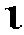 ερ (28) δυ σ 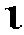 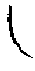 γε (26) συππλ┌µεντα 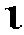 ρε φορµε υν ανγλε (α) déterminé avec son assise (30) pour proposer une place assise supplémentaire.

## Description

L'invention concerne un agencement de sièges à l'intérieur d'un habitacle de véhicule automobile.

L'invention concerne plus particulièrement un agencement de sièges à l'intérieur d'un habitacle de véhicule automobile, qui comporte au moins deux sièges avant et au moins deux sièges arrières, indépendants ou bien formant banquette, alignés chacun avec un des sièges avant, et du type qui comporte un siège supplémentaire qui est interposé transversalement entre les lignes de sièges arrière et avant.

On connaît de nombreux exemples d'agencements de ce type.

Le document EP-B1-0.423.669 décrit et représente un agencement de ce type comportant un siège supplémentaire qui est interposé transversalement entre les lignes de sièges arrière et avant. Ce siège supplémentaire n'est pas amovible et occupe donc de ce fait un espace important au sein de l'habitacle du véhicule, même lorsqu'il n'est pas utilisé.

L'invention remédie à cet inconvénient en proposant un siège supplémentaire amovible et escamotable à volonté.

Dans ce but, l'invention propose un agencement du type décrit précédemment, caractérisé en ce que ledit siège supplémentaire est interposé longitudinalement au moins en partie entre les rangées de sièges arrière et avant de manière que son assise déborde sur au moins une partie avant des assises des sièges arrières, est escamotable, et est au moins mobile entre une position escamotée dans laquelle un dossier du siège supplémentaire est rabattu sur son assise, et une position déployée dans laquelle le dossier du siège supplémentaire forme un angle déterminé avec son assise pour proposer une place assise supplémentaire.

Selon d'autres caractéristiques de l'invention :
- l'assise du siège supplémentaire est montée mobile verticalement sur un plancher du véhicule entre une position basse associée à la position escamotée du siège, et une première position haute associée à la position déployée du siège,
- les sièges arrière sont montés coulissants entre deux positions extrêmes avant et arrière, et les assises des sièges arrières occupent une seconde position haute agencée au dessus du niveau du dossier du siège supplémentaire lorsqu' il est replié sur son assise dans la position basse escamotée dudit siège supplémentaire, pour permettre notamment aux assises des sièges arrière, dans leur position avant, de recouvrir au moins en partie le siège supplémentaire dans sa position escamotée,
- le dossier du siège supplémentaire comporte une face dorsale qui porte un élément d'habillage et d'assise qui est destiné à être agencé dans le prolongement des assises des sièges arrière lorsqu'ils recouvrent en partie le siège supplémentaire dans sa position escamotée,
- les sièges arrière, dans leur position avant, et dans la position escamotée du siège supplémentaire, recouvrent entièrement la face dorsale du dossier du siège supplémentaire à l'exception de l'élément d'habillage et d'assise et ils comportent une découpe complémentaire de l'élément d'habillage et d'assise du siège supplémentaire,
- les sièges arrière sont montés coulissants indépendamment l'un de l'autre et ils comportent des demi-découpes agencées formées en regard l'une de l'autre dans leurs bords jointifs, qui sont destinées à former la découpe complémentaire de l'élément d'habillage et d'assise du siège supplémentaire,
- le siège supplémentaire est monté coulissant longitudinalement.

D'autres caractéristiques et avantages de l'invention apparaîtront à la lecture de la description détaillée qui suit pour la compréhension de laquelle on se reportera aux dessins annexés dans lesquels :
- les figures 1 à 4 sont des vues en perspective illustrant le passage de la position escamotée à la position déployée du siège supplémentaire ;
- la figure 5 est une vue en perspective illustrant la possibilité de réglage longitudinal du siège supplémentaire ;
- la figure 6 est une vue en perspective illustrant le recouvrement du siège supplémentaire par les assises des sièges arrière lorsque le siège supplémentaire occupe sa position escamotée.
- la figure 7 est une vue en perspective de détail illustrant la remontée de l'assise du siège supplémentaire lors du passage de sa position escamotée à sa position déployée.

Dans la description qui va suivre, des chiffres de référence identiques désignent des pièces identiques ou ayant des fonctions similaires.

On a représenté sur les figures l'ensemble d'un agencement 10 de sièges à l'intérieur d'un habitacle 12 d'un véhicule automobile (non représenté).

De manière connue, l'agencement 10 comporte au moins deux sièges avant 14, 16 et au moins deux sièges arrières 18, 20 alignés chacun avec un des sièges avant 14, 16.

On comprendra par le terme de "siège" tout élément d'assise délimitant une place permettant à un passager du véhicule de s'asseoir, qu'il s'agisse d'un siège indépendant destiné à ne recevoir qu'un passager ou un siège faisant partie d'une banquette susceptible de recevoir plusieurs passagers.

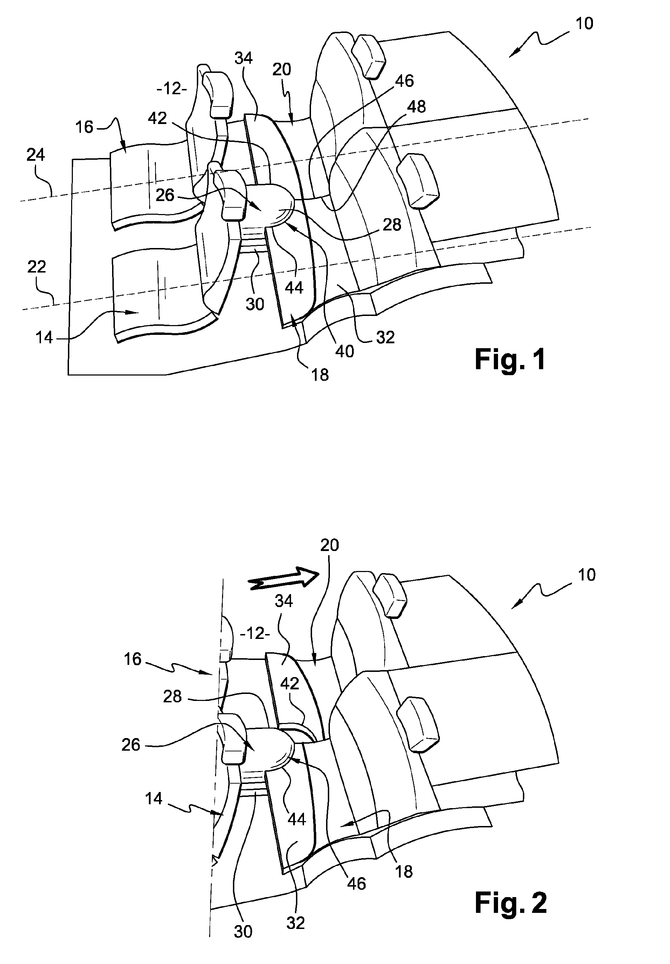

A titre d'exemple, comme représenté à la figure 1, le siège arrière 18 est aligné avec le siège avant 14 suivant une ligne générale 22 et le siège arrière 20 est aligné avec le siège avant 16 suivant une ligne générale 24.

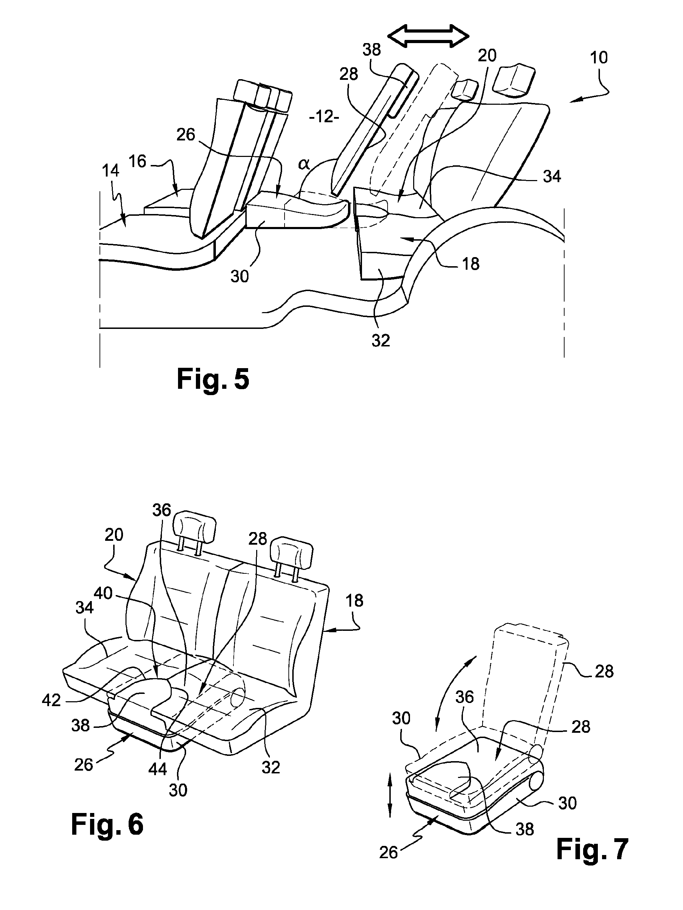

Comme l'illustrent les figures 4 et 5, l'agencement 10 comporte un siège supplémentaire 26 qui est interposé transversalement entre les lignes 22, 24 de sièges arrière 18, 20 et avant 14, 16.

Conformément à l'invention, comme l'illustrent les figures 1 à 5, le siège supplémentaire 26 est interposé longitudinalement au moins en partie entre les rangées 22, 24 de sièges arrière 18, 20 et avant 14, 16 de manière que son assise 30 déborde sur au moins une partie avant des assises 32, 34 des sièges arrières 18, 20.

Par ailleurs, le siège supplémentaire 26 est escamotable, et est au moins mobile entre une position escamotée, représentée aux figures 1 et 2, dans laquelle un dossier 28 du siège 26 supplémentaire est rabattu sur son assise 30, et une position déployée, représentée aux figures 4 et 5, dans laquelle le dossier 28 du siège 26 supplémentaire forme un angle "α" déterminé avec son assise 30 pour proposer une place assise supplémentaire.

Plus particulièrement, comme l'illustre la figure 7, l'assise 30 du siège 26 supplémentaire est montée mobile verticalement sur un plancher du véhicule entre une position basse, représentée en traits forts, qui est associée à la position escamotée du siège 26 des figures 1 et 2, et une première position haute, représentée en traits pointillés, qui est associée à la position déployée du siège 26 des figures 4 et 5.

Cette configuration permet notamment au siège supplémentaire 26 de n'occuper qu'un encombrement vertical réduit lorsqu'il occupe sa position escamotée.

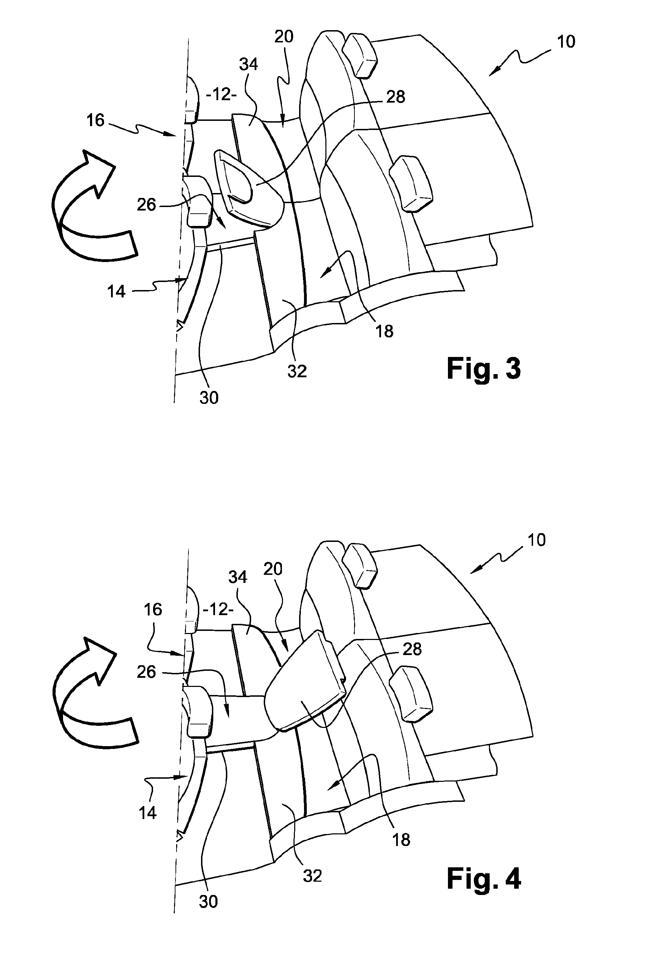

Il convient de noter que la remontée de l'assise 30 du siège supplémentaire 26 peut être associée au déploiement de son dossier 28 par un mécanisme (non représenté) pour permettre le déploiement du siège 26 en une seule opération, effectuée d'une seule main par l'utilisateur du siège 26, comme représenté à la figure 3.

Par ailleurs, les sièges arrière 18, 20 sont montés coulissants entre deux positions extrêmes, à savoir une position extrême avant qui a été représentée à la figure 1 pour les deux sièges 18, 20, et une position extrême arrière qui a été représentée aux figures 3 et 4, et les assises 32, 34 respectives des sièges arrières 18, 20 occupent une seconde position haute agencée au dessus du niveau du dossier 28 du siège supplémentaire 26 lorsqu'il est replié sur son assise dans la position basse escamotée dudit siège 26 supplémentaire.

Cette configuration permet avantageusement aux assises 32, 34 des sièges arrière 28, 20, dans leur position avant, de recouvrir au moins en partie le siège 26 supplémentaire dans sa position escamotée comme représenté aux figures 1 et 6.

Dans cette position, pour dissimuler le dossier 28 du siège supplémentaire 26 et fournir une assise confortable au passagers des sièges arrière 18, 20, le dossier 28 du siège 26 supplémentaire comporte une face dorsale 36 qui porte un élément 38 d'habillage et d'assise qui est destiné à être agencé dans le prolongement des assises 32, 34 des sièges arrière 18, 20 lorsqu'ils recouvrent en partie le siège supplémentaire 26 dans sa position escamotée. Cet élément d'habillage, qui est par exemple constitué d'un coussin intégré à la face dorsale 36 du dossier 28 du siège 26, a été représenté notamment sur les figures 6 et 7.

Plus particulièrement, les sièges arrière 18, 20, dans leur position avant, et dans la position escamotée du siège supplémentaire 26, recouvrent entièrement la face dorsale du dossier du siège 26 supplémentaire à l'exception de l'élément 38 d'habillage et d'assise.

Par ailleurs, les sièges arrière 18, 20 comportent une découpe 40 complémentaire de l'élément 38 d'habillage et d'assise du siège 26 supplémentaire.

L'élément 38 d'habillage et d'assise du siège 26 supplémentaire prolonge donc alors les assises des sièges arrière 18, 20.

De ce fait, le siège supplémentaire 26 est entièrement dissimulé par les sièges arrière 18, 20 et par son élément 38 d'habillage et d'assise lorsqu'il est escamoté.

Dans le mode de réalisation préféré de l'invention, comme l'illustre la figure 2, les sièges arrière 18, 20 sont montés coulissants indépendamment l'un de l'autre et ils comportent des demi-découpes 42, 44 agencées formées en regard l'une de l'autre dans leurs bords jointifs 46, 48, qui sont destinées à former la découpe complémentaire 40 de l'élément 38 d'habillage et d'assise du siège 26 supplémentaire.

Il sera compris que cette configuration ne soit pas limitative de l'invention, et que les sièges arrière 18, 20 pourraient être solidaires l'un de l'autre.

Enfin, comme l'illustre la figure 5 qui représente en traits forts et en traits pointillés deux positions longitudinales du siège 26, le siège 26 supplémentaire est monté coulissant longitudinalement, pour permettre une adaptation optimale de l'espace longitudinal disponible au sein de l'habitacle 12 du véhicule.

L'invention permet donc de disposer d'une cinquième place entièrement escamotable au sein de l'habitacle 12 d'un véhicule automobile.

L'invention permet donc avantageusement d'agencer un siège 26 supplémentaire au sein d'un habitacle 12 de véhicule automobile même si la distance entre les sièges arrière 18, 20, ou entre des assises d'une banquette équivalente, est réduite, et ce, sans que lesdits sièges 18, 20 ou que lesdites assises correspondantes ne soient montées coulissantes transversalement.

## Revendications

1. Agencement (10) de sièges à l'intérieur d'un habitacle de véhicule automobile, qui comporte au moins deux sièges avant (14, 16) et au moins deux sièges arrières (18, 20), indépendants ou bien formant banquette, alignés chacun avec un des sièges avant (14, 16), et du type qui comporte un siège (26) supplémentaire qui est interposé transversalement entre les lignes (22, 24) de sièges arrière (18, 20) et avant (14, 16), **caractérisé en ce que** ledit siège (26) supplémentaire est interposé longitudinalement au moins en partie entre les rangées (22, 24) de sièges arrière (18, 20) et avant (14, 16) de manière que son assise (30) déborde sur au moins une partie avant des assises (32, 34) des sièges arrières (18, 20), est escamotable, et est au moins mobile entre une position escamotée dans laquelle un dossier (28) du siège (26) supplémentaire est rabattu sur son assise (30), et une position déployée dans laquelle le dossier (28) du siège (26) supplémentaire forme un angle (α) déterminé avec son assise (30) pour proposer une place assise supplémentaire.

2. Agencement (10) de sièges selon la revendication précédente, **caractérisé en ce que** l'assise (30) du siège (26) supplémentaire est montée mobile verticalement sur un plancher du véhicule entre une position basse associée à la position escamotée du siège (26), et une première position haute associée à la position déployée du siège (26).

3. Agencement (10) de sièges selon la revendication précédente, **caractérisé en ce que** les sièges arrière (18, 20) sont montés coulissants entre deux positions extrêmes avant et arrière, et **en ce que** les assises (32, 34) des sièges arrières (18, 20) occupent une seconde position haute agencée au dessus du niveau du dossier du siège (26) supplémentaire lorsqu'il est replié sur son assise (30) dans la position basse escamotée dudit siège (26) supplémentaire, pour permettre notamment aux assises (32, 34) des sièges arrière (18, 20), dans leur position avant, de recouvrir au moins en partie le siège (26) supplémentaire dans sa position escamotée.

4. Agencement (10) selon la revendication précédente, **caractérisé en ce que** ce que le dossier (28) du siège (26) supplémentaire comporte une face dorsale (36) qui porte un élément (38) d'habillage et d'assise qui est destiné à être agencé dans le prolongement des assises (32, 34) des sièges arrière (18, 20) lorsqu'ils recouvrent en partie le siège (26) supplémentaire dans sa position escamotée.

5. Agencement (10) selon la revendication précédente, **caractérisé en ce que** les sièges arrière (18, 20), dans leur position avant, et dans la position escamotée du siège supplémentaire, recouvrent entièrement la face dorsale (36) du dossier du siège (26) supplémentaire à l'exception de l'élément (38) d'habillage et d'assise et **en ce qu'**ils comportent une découpe (40) complémentaire de l'élément (38) d'habillage et d'assise du siège (26) supplémentaire.

6. Agencement (10) selon la revendication précédente, **caractérisé en ce que** les sièges (18, 20) arrière sont montés coulissants indépendamment l'un de l'autre et **en ce qu'**ils comportent des demi-découpes (42, 44) agencées formées en regard l'une de l'autre dans leurs bords jointifs (46, 48), qui sont destinées à former la découpe (40) complémentaire de l'élément (38) d'habillage et d'assise du siège (26) supplémentaire.

7. Agencement (10) selon l'une quelconque des revendications précédentes, **caractérisé en ce que** le siège (26) supplémentaire est monté coulissant longitudinalement.
